# EUROPEAN PATENT APPLICATION

(11) **EP 1 521 437 A2**
(43) Date of publication of application: **06.04.2005**
(21) Application number: 04256055.7
(22) Date of filing: 30.09.2004
(51) Int. Cl.: H04M 1/725

(54) **System and method for accessing Internet resources with a mobile device**

(30) Priority: 02.10.2003 US 677620
(71) Applicant: Openwave Systems Inc., Redwood City, CA 94063 (US)
(72) Inventor: Wugofski, Theodore D., Fort Worth, TX 76109 (US); Hartmaier, Peter J., Woodinville, WA 98077 (US); Wills, Fergus, Belfast BT6 0BB (IE)
(74) Representative: Jackson, Richard Eric

(57) **Abstract**

A system and method for accessing resources comprising entering a code on a mobile device, and launching a browser on the mobile device in response to the activation of a web button on the mobile device, wherein the code is automatically used as a resource identifier when the browser launches. A system and method for establishing a data session for a mobile device comprising receiving a request to establish the data session, wherein the request includes a resource identifier code that is an invalid resource identifier, converting the resource identifier code to a valid resource identifier, and establishing the data session between the mobile device and a resource associated with the valid resource identifier.

## Description

### TECHNICAL FIELD

The present invention is related generally to connecting to resources using a browser on a mobile handset and, more particularly, to connecting to a resource using a short code as the URI.

### BACKGROUND

Many mobile devices, such as mobile telephones or wireless Personal Digital Assistants (PDA), include a browser application and provide the capability to access data services via the Internet. However, it is usually much easier for mobile users to make a telephone call with their mobile handset compared to accessing data services via the same handset. The problem of entering address information into a mobile browser makes it difficult to access data services, such as Internet websites, via mobile handsets.

Data services are typically identified using an alphanumeric Universal Resource Identifier (URI) that is cumbersome to enter via the typical numerical keypad on a mobile telephone. If the user has to enter an alphanumeric character string via the numeric keypad, each character may require several keystrokes. Since URIs typically include long character strings, the user may be discouraged from using certain resources via the browser because of the effort involved in entering the resources' address.

Moreover, the user has to find and launch the appropriate browser application or messaging client in order to access a data service. If the desired resource is a WAP or web-based service, then the user must find and launch the mobile browser. On the other hand, if the user wants to use a SMS or messaging data services, then the user must find and launch a messaging client on the mobile handset. Accordingly, the user must know which client or application on the mobile handset corresponds to the selected or desired service.

### SUMMARY OF THE INVENTION

The present invention provides the ability to quickly and easily access data services, such as Internet websites, via a mobile device using digit strings or short codes that are entered into the mobile device. The invention adds a "web" button to the mobile device, which may be a separate or unique key that is similar to the "talk" or "send" buttons on most mobile telephones. Alternatively, the "web" button may be a designated programmable button or key, a soft key, or a selection from a menu display. In other embodiments, instead of using a "web" button, the mobile device can be programmed to recognize other situations where a user desires to connect to a data service. For example, if the user "sends" a digit string that does not include the standard number of digits for a telephone number, then the connection is treated as a data connection and not a normal voice call.

The user enters the short code, such as a string of numbers, via the keypad on the mobile device and then presses the "web" button. The mobile device then automatically launches the mobile devices' browser application and inserts the short code as the URI. The browser then initiates a data session by sending the URI information to a gateway server or some other device. The gateway server recognizes that the short code in the URI is not a standard address and attempts to translate the short code into the URI desired by the user. This translation may be accomplished by querying a user profile that resides in a database. Once the gateway server determines the desired URI, it establishes a data session between the mobile handset and the resource at the desired URI.

The user may associate a profile with one or more mobile handsets, wherein the profile includes information that relates various short codes to desired URIs or resources. A service provider may provide a database that associates standardized or common short codes to URIs. The gateway server may access the user's profile, a service provider's database, or a third party database, or may generate other queries to associate the short code with a URI.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

FIGURE 1 illustrates an exemplary system incorporating the present invention;

FIGURE 2 is a flowchart illustrating the process used in one embodiment of the present invention; and

FIGURE 3 is a flowchart illustrating a process used in an alternative embodiment of the invention.

### DETAILED DESCRIPTION

The present invention provides direct access to websites or other Internet resources from a mobile handset. The user keys in a number as if initiating a telephone call. The keyed-number is a short code that corresponds to a desired Internet resource. Instead of triggering the mobile handset with a "talk" button, the user activates a "web" button. The mobile handset then passes the short code to the mobile's browser application. The browser uses the short code as a Uniform Resource Identifier (URI) and sends a request to a web server to establish a connection to the URI. Upon receipt of this request, the web server uses the present invention to translate the short code into a standard URI and to connect the data session directly to the resource or site defined by that number.

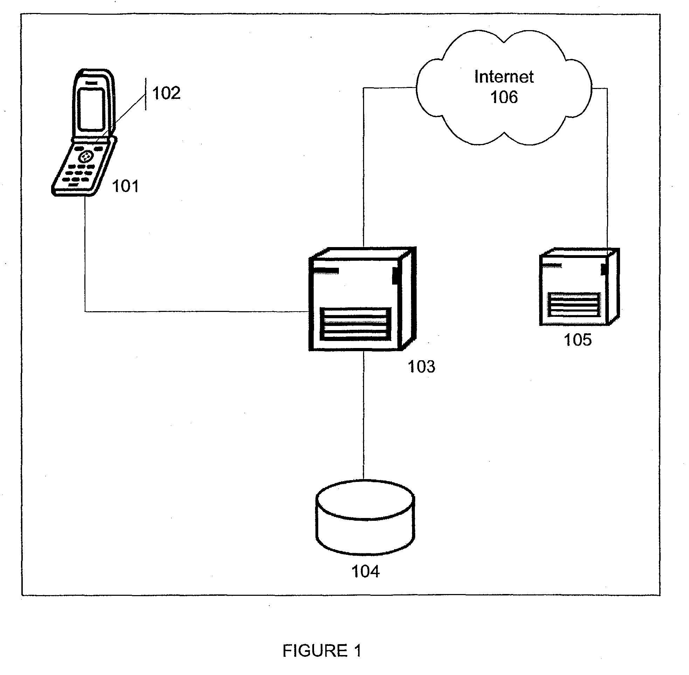

FIGURE 1 illustrates an exemplary system incorporating the present invention. Handset 101 is any mobile or wireless device, such as a mobile telephone, Personal Digital Assistant (PDA) or the like, having a browser application. The present invention adds a new capability to handset 101 in the form of a designated button 102. Button 102 may be separate physical button or key on mobile handset 101.
Alternatively, button 102 may be a soft key, a menu selection, a voice-activated function, or other mechanism. The user keys in a number or a short code into the mobile telephone using the keypad. When the user activates button 102, mobile handset 101 launches its browser application and passes the keyed-in number or short code to the browser as a URI.

The browser accepts the short code as the URI and connects to gateway web server 103 over any available data channel. The data channel may be established using any appropriate format, such as WAP, that is available between handset 101 and the serving mobile network. Gateway web server 103 may be a component within the serving mobile or wireless network or it may be a separate device. Gateway web server 103 receives URI request from handset 101 and detects that the browser is passing a number in the URI address instead of the more commonly known text string. Gateway web server 103 then determines that the short code in the URI address must be converted to a routable URI.

The conversion from a short code to a routable URI may be accomplished using a user profile database. For example, the user may establish a user profile that identifies the desired URI for various short codes. The user profile may be stored in database 104, which is linked to gateway web server 103. Database 104 may be located near to or remote from server 103 or it may reside on server 103. A particular user profile stored in database 104 may be associated with one or more mobile handsets to allow a user to employ the same set of short codes on multiple mobile devices. When gateway web server 103 receives a short code URI from mobile handset 101, it sends a suitable query using, for example, a DNS lookup, a database query, or reverse proxying, depending upon the available mechanism, to database 104 retrieve the desired URI information from a user profile that is associated with mobile handset 101. Database 104 returns the URI that is represented by the entered number.

Once gateway web server 103 has determined the correct URI, server 103 establishes a data session with the related resource, such as a resource on server 105. The data session may be connected via Internet 106 or other network connections as necessary. Once connected to the desired resource 105, the browser in mobile handset 101 interacts with the resource according to well known methods. The present invention allows mobile handset 101 and its browser to establish that connection without having to enter the complete URI for the resource. Instead, the present invention allows the user to enter a partial URI or a short code in place of the complete URI for the resource.

In an alternative embodiment, gateway web server 103 queries the user's profile on database 104 to determine the one or more URIs that correspond to the short code that was transmitted by mobile handset 101. Server 103 then transmits the URIs to handset 101 where they are displayed to the user, for example, via a menu on the browser. The user may then select the desired target website from a displayed list. For example, in one embodiment, the user may transmit a news short code that results in the establishment of a data session with a specific news-oriented website. In an alternative embodiment, the news short code may prompt gateway web server 103 to return a list of news websites to mobile handset 101 for display to the user, thus allowing the user to select a particular news website to which the browser should be connected in a data session.

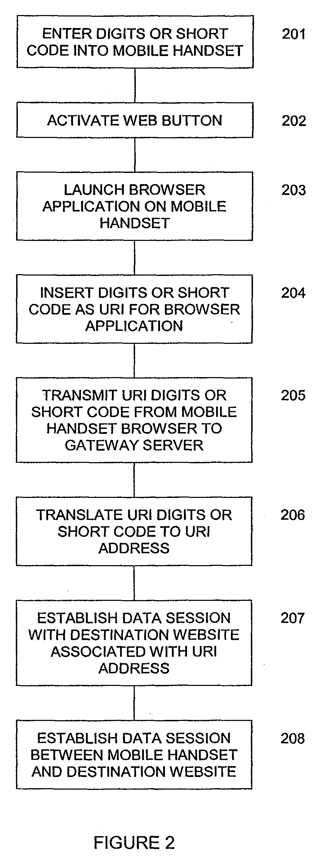

FIGURE 2 is a flowchart illustrating the process used in one embodiment of the present invention. At 201, a user enters digits or a short code into a mobile handset. This may be done in the same manner that a user dials a telephone number on the mobile handset keypad to initiate a voice call. However, instead of pressing "send" or "talk" or some other key to initiate a voice call, at 202, the user presses or otherwise activates a "web" button on the mobile handset. The "web" button may be a unique key on the mobile handset keypad, or it may be a menu selection that is available to the user on a handset display. Alternatively, the "web" button may be a soft key or a programmable function button on the mobile handset. The user may also select the "web" function using a voice-actuated command, if the mobile handset supports such functionality. It will be understood that the "web" button may be designated by a label or title using the word "web" or any other term without limitation. The function of the "web" button is to initiate the functions, processes or operations described below.

In response to activation of the "web" button, at 203, the mobile handset launches its browser application and, at 204, the mobile handset inserts the digits or short code (from 201) as the URI for the browser application. The browser application may be any browser now known or later developed that provides a means to look at and interact with information on the Internet, the World Wide Web, or any other private or public computer or data network. At 205, the browser application transmits the URI digits or short code from the mobile handset to a gateway server in the same manner in which the browser transmits a any other URI to establish a data session with a desired resource. The gateway server may be any device that is capable of establishing a data session between the mobile handset browser and a desired resource, such as a website. The gateway server may be part of the mobile handset's wireless network or it may be separate from the wireless network.

At 206, the gateway server translates the URI digits to the proper URI address for the desired resource. The translation may be accomplished by referring to a database having, for example, a user profile that associates digit strings or short codes with URIs or website addresses. Once the gateway server has identified the desired URI, then, at 207, it establishes a data session with the destination resource associated with that URI address. At 208, the browser on the mobile handset establishes a data session with the destination resource. The browser may then download content from the resource, display information from the resource, or otherwise interact with the resource.

The URI may be associated with any resource or content whether it be a webpage, a page of text, a video or audio clip, a still or animated image, or a program. Users of the present invention may associate any string of digits or short code with any URI. As is well known, the URI for a resource typically describes: (1) the mechanism used to access the resource (for example, hypertext transfer protocol or "http://"), (2) the specific computer in which the resource is housed (the computer can typically be mapped to a unique Internet address), and (3) the specific name of the resource, file or program. The short codes used with the present invention may be linked to a webpage, a File Transfer Protocol (FTP) address, an e-mail address or any other resource.

The present invention allows a user to use a familiar number and a single click to access a data service. The user merely has to key in a number and then press the "web" button instead of "talk" or "send" to be connected to the data service, web site or other resource. The user does not have to find and launch the browser, navigate to the URL line, and enter the address.

In one embodiment, the user may use Short Message Service (SMS) short codes to access services. This allows users to continue to use the same SMS codes to access WAP and web content available on mobile phones. Alternatively, the short codes used in the present invention may be the same as existing toll free (800) numbers. Other numbers, such as industry standard short codes, long codes, application access codes, Webnums, and Bango numbers may be used with the present invention. The short codes may be any number and are not restricted in length. Using these well-established numbers as short codes allows service providers and users to get to information and services quickly without having to navigate through menus or struggle with inputting URL text.

In one embodiment, a request from the mobile device's browser with nothing more than a number in the URL line, executes a routine to resolve the number into a routable URL address. Based on standard proxy routing methods, a connection to the correct Web site is made. At this point, the connection is managed as if the user had entered the site by entering the URL and connecting directly. A local server may be used to resolve the addresses associated with the short codes. The server may also access centralized or third party databases as they become available.

The present invention allows a user to enter one number to make a phone call, send an SMS message, and connect to a service or resource via the mobile Internet. Using a company's toll free 800 number, for example, a user may dial that number directly to establish a voice call, or the user may send an SMS message to that number. The present invention allows the user to enter a company's toll free number and, after pressing the "web" button, connect to the company's website via a mobile handset. This allows users to avoid having to enter long alphanumeric character strings via the keypad as the browser's URI. Additionally, users do not have to remember the URIs for frequently used services.

In a preferred embodiment, the user enters the short code, and the number is used to initiate a connect to a web site or other resource that has been identified in the user's profile. Alternatively, if the user has no profile, or if the short codes does not appear in the profile, then a gateway server may attempt to resolve the unknown short codes or digit strings by querying a database. For example, if the user enters a telephone number and presses the "web" button, the gateway server may query a database using the telephone number to retrieve URLs associated with the telephone number. The telephone number may be for a company, for example, and the database may return one or more URLs for websites related to that company. These website URLs or other information may be displayed on the mobile handset to prompt the user to select one of the websites. Alternatively, if the user enters a telephone number for a company, the present invention may identify a top-level domain for that company and may establish a data session between the mobile handset and a website at that top-level domain URL address.

Table 1 represents the type of information that may be stored in a user profile for use with the present invention.

**TABLE 1**

| SHORT CODE | CORRESPONDING URI |
|---|---|
| 6397 (N-E-W-S) | http://www.cnn.com/ http://www.foxnews.com http://abcnews.go.com/ http://www.msnbc.com/news/ http://www.cbsnews.com/secti ons/home/main100.shtml |
| 266 (C-N-N) | http://www.cnn.com/ |
| 776787 (S-P-O-R-T-S) | http://msn.espn.go.com/ |
| 3776 (E-S-P-N) | http://msn.espn.go.com/ |
| 6504804801 | http://www.openwave.com/ |

Using the exemplary profile shown above, when the user enters the short code "6397" and presses the "web" button, the browser will attempt to establish a data session with a resource having the URI "6397." The gateway server determines that "6397" is a short code and queries the user's profile to determine the desired URI. The short code "6397" corresponds to the letters N-E-W-S on the keypad. In the example set forth above, the user has opted to associate with code with five URLs for various news organization websites. As a result, the gateway server may return these five values to the user's mobile handset where they will be displayed on a list or menu, for example, and the user will select a desired website. Upon receiving the user's selection, the gateway server establishes a data session between the mobile handset and the selected website.

In another example, the user may enter the short code "266," which corresponds to the letters C-N-N on the keypad. The gateway server will correlate this short code to the URL for CNN News in the user's profile and will establish a data session with that site. Alternatively, the user may enter a company's telephone number as a short code, such as "650 480 4801," and, upon pressing the "web" button, the gateway server will correlate to the URL for that company using either the user's profile or some other database. This allows the user to access web pages or other resources without having to remember and enter the company's URL address.

In other embodiments, the mobile device does not use a "web" button, but instead recognizes when the user desires to connect to a web service based upon the digit string that is entered by the user. For example, the mobile device could be programmed so that if the user enters six digits (or some other number of digits that do not correspond to a standard seven, ten or eleven digit telephone number), then the mobile device will treat this as a request for a data service connection. Accordingly, when the user enters six digits and presses a call connection buttons, such as a "send" or "talk" button, instead of attempting to make a voice call connection, the device recognizes the non-standard digit string, launches the browser, routes the digit string to a gateway server, which attempts to establish a data session between the user and a resource corresponding to the digit string.

Alternatively, entering a digit string on the mobile device and then hitting the "web" button (or implying a desired data connection via the "talk" or "send" button) may instead trigger an application on the device that fetches the desired data or that simply runs a local application. In this embodiment, no browser is involved or required, however, a server could be used to translate the digit string into a specific connection to the application.

The mobile device or handset in the present invention may also be used to resolve the digit string into a URI before sending the resource identifier to the gateway server to establish a data connection. For example, when the user enters the digit string and activates a "web" button or similar feature, the mobile device launches the browser application. However, before sending the digit string as the resource identifier, the mobile device or the browser application may determine that the digit string is not a valid URI. The mobile device or browser application may then check a stored list of digit strings and URIs, such as, for example, the list illustrated in Table 1 above. If the mobile device or browser application can resolve the digit string into a URI, then it replaces the digit string with the appropriate URI in the browser and sends the valid URI to the gateway server as the resource identifier. A data session is then established to the URI that was inserted for the digit string. If, however, the mobile device or browser application cannot resolve the digit string using a locally stored list (i.e. a list stored on the mobile device), then the digit string is sent to the gateway server for resolution according to the embodiments disclosed and illustrated herein.

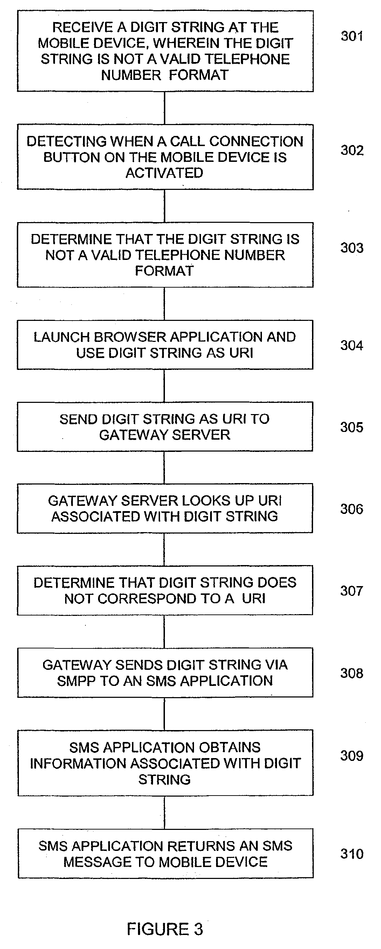

In another embodiment, the system treats the digit string as a URI as the default condition, but, if there is no corresponding URI, then the system treats the digit string as an SMS request message. FIGURE 3 is a flowchart illustrating a process for connecting a mobile device to a desired resource or information.

At 301, the mobile receive a digit string that is entered by the user. The digit string is not a valid telephone number format, for example in the United States, the digit string does not have seven or ten digits or if it has eleven digits, then the first digit is not a "1." In other countries having other telephone number formats, the digit string might be limited in other ways. At 302, the mobile device detects when a call connection button is activated. As discussed above, this may be a "web," "send," or "talk" button , a menu selection, or a programmable key. If a "send" or "talk" button is activated and the digit string is not a valid telephone number format, then it is probable that the user is not trying to establish a voice connection. Accordingly, when the mobile device determines that the digit string is not a valid telephone number at 303, the device launches a browser application at 304 using the digit string as the URL, as discussed above.

The digit string is sent to a gateway server at 305 as if it was a valid URI. At 306, the gateway server recognizes that the digit string is not a complete or valid URI, and the server looks up the URI that is associated with the digit string. If there is an associated URI, then a data session is established between the resource at that URI and the mobile device.

However, at 307, if the gateway server determines that there is no URI associated with the digit string, then the process treats the digit string as an SMS code. At 308, the gateway server sends the digit string to an SMS application. The digit string may be send via Short Message Peer to Peer (SMPP) protocol, which is an open industry standard messaging protocol designed to simplify integration of data applications with wireless mobile networks, such as GSM, TDMA, CDMA and PDC networks. The SMS application may be an application on the gateway server or it may be a separate device, such as an SMS gateway in the wireless network.

The SMS application processes the digit string as appropriate. For example, the SMS application may determine that the digit string is a request for information or data, and, in 309, the SMS application collects the requested information. In 310, the SMS application creates an SMS message directed to the mobile device and sends the requested information to the device via the SMS message.

Those of skill in the art will recognize that many applications can be used where the exemplary embodiment uses a "browser." For example, any application that is capable of making a network request may be triggered when the "web" button or other button or selection is activated. The digit string can be provided to the network request application, which generates a request similar to a browser. Accordingly, a full Internet browser is not required to use the present invention. In one embodiment, a protocol stack library can be used to implement the network request application.

It will be understood that the user may enter as many short codes and URIs in a profile as are available within the storage limits of the database. Additionally, the user may link as many URIs to a short code as desired and those URIs will be displayed for a user to make a further selection. The user may edit the profile either via the mobile handset or over a separate connection, such as by using a personal computer that may access the user profile database via the Internet. The short codes used with the present invention may comprise a string of one or more characters. The characters in the short code are digits in one embodiment, but may also comprise any other character, such as any character on a mobile handset keypad or characters that are entered into the mobile device using a series of keystrokes, from a menu selection or are handwritten using a stylus or other device.

Although the present invention and its advantages have been described in detail, it should be understood that various changes, substitutions and alterations can be made herein without departing from the invention as defined by the appended claims. Moreover, the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method for accessing resources, comprising:
receiving, at a mobile device, a code entered by a user;
detecting the activation of a web button on the mobile device; and
launching an application on the mobile device, wherein the code is used as a resource identifier when the application launches.

2. The method of claim 1 wherein the application is a browser.

3. The method of claim 1 further comprising:
sending the code as the resource identifier from the mobile device to a gateway server, wherein the code is not a complete resource identifier.

4. The method of claim 3 further comprising:
identifying, by the gateway server, a complete resource identifier that has been associated with the short code by a user.

5. The method of claim 1 further comprising:
identifying, at the mobile device, a complete resource identifier that has been associated with the short code by a user; and
sending the complete resource identifier from the mobile device to a gateway server.

6. The method of claim 1 further comprising:
establishing a data session between the mobile device and a resource that is associated with the code.

7. The method of claim 1 wherein the code is a string of one or more characters entered via a keypad on the mobile device.

8. The method of claim 1 wherein the web button is a dedicated button on the mobile device.

9. The method of claim 1 wherein the web button is a programmable key on the mobile device.

10. The method of claim 1 wherein the web button is a menu selection on the mobile device.

11. A method for establishing a data session for a mobile device, comprising:
receiving a request to establish the data session, wherein the request includes a resource identifier code that is an invalid resource identifier;
converting the resource identifier code to a valid resource identifier; and
establishing the data session between the mobile device and a resource associated with the valid resource identifier.

12. The method of claim 11 further comprising:
querying a database using the resource identifier code to identify the valid resource identifier.

13. The method of claim 12 the database comprises one or more user profiles that associate the resource identifier code with the valid resource identifier.

14. The method of claim 11 wherein the resource identifier code is string of characters entered via a keypad on the mobile device.

15. The method of claim 11 further comprising:
retrieving a plurality of valid resource identifiers associated with the resource identifier code; and
sending the plurality of valid resource identifiers to the mobile device.

16. The method of claim 11 wherein the resource identifier code is a standardized code for a particular resource.

17. A mobile device comprising:
a browser application; and
a web button operable to launch the browser on the mobile device in response to the activation of the web button, wherein a code that has been entered into the mobile device is automatically used as a resource identifier when the browser launches.

18. The mobile device of claim 17 wherein the web button is a dedicated button on the mobile device.

19. The mobile device of claim 17 wherein the web button is a programmable key on the mobile device.

20. The mobile device of claim 17 wherein the web button is a menu selection on a display on the mobile device.

21. The mobile device of claim 17 further comprising:
a transmitter for sending the code as the resource identifier from the mobile device to a gateway server.

22. The mobile device of claim 17 wherein the code is not a complete resource identifier.

23. The mobile device of claim 17 wherein the browser is operable to establish a data session between the mobile device and a resource that a user has associated with the code.

24. The mobile device of claim 17 wherein the code corresponds to a plurality of resource identifiers associated with the code, and wherein the plurality of resource identifiers are displayed on the mobile device.

25. A system comprising:
a server coupled to a wireless network and operable to receive requests from mobile devices; and
a database coupled to the gateway server, the database comprising profile information that associates codes sent from the mobile devices with desired resource identifiers.

26. The system of claim 25 wherein the server further comprises:
means for detecting data session requests from the mobile devices, wherein the data session requests comprise a code as the resource identifier; and
means for querying the database to determine the desired resource identifier.

27. A method for connecting a mobile device to a data service, comprising:
receiving a digit string at the mobile device, wherein a length of the digit string does not correspond to a standard telephone number;
detecting the activation of a call connection button on the mobile device;
determining that the digit string does not correspond to a telephone number; and
launching an application on the mobile device, wherein the application is associated with the digit string.

28. The method of claim 27 wherein the application is a browser and wherein the digit string is used as a resource identifier when the browser launches.

29. The method of claim 27 wherein the application retrieves data that is requested by a user and wherein the digit string is used to identify the requested data.

30. The method of claim 27 wherein the call connection button is a button labeled "talk" or "send" on the mobile device.

31. The method of claim 27 wherein the digit string comprises one or more characters that appear on a key pad of the mobile device.

32. A method for requesting information using mobile device comprising:
receiving, at a mobile device, digits entered by a user;
detecting the activation of a call connection button on the mobile device; and
launching an application on the mobile device, wherein the code is used as a resource identifier when the application launches.

33. The method of claim 32 further comprising:
determining, at the mobile device, that the digits are not a valid resource identifier;
replacing the digits with an associated valid resource identifier; and
sending a data connection request using the associated valid resource identifier.

34. The method of claim 32 further comprising:
determining, at the mobile device, that the digits are not a valid resource identifier; and
searching a stored list of resource identifiers for a valid resource identifier that is associated with the digits.

35. A method for providing information to a mobile device, comprising:
receiving a request to establish a data session with the mobile device, wherein the request includes a resource identifier code that is an invalid resource identifier;
determining that the resource identifier code is not a valid resource identifier; and
sending the resource identifier code to an SMS application.

36. The method of claim 35 further comprising:
creating an SMS message directed to the mobile device.

37. The method of claim 35 further comprising:
obtaining information associated with the resource identifier code; and
creating an SMS message directed to the mobile device, wherein the SMS message comprises the information associated with the resource identifier code.

38. The method of claim 35 wherein the resource identifier code comprises a digit string entered by a user on the mobile device.
